# EUROPEAN PATENT APPLICATION

(11) **EP 2 554 831 A1**
(43) Date of publication of application: **06.02.2013**
(21) Application number: 11765454.1
(22) Date of filing: 25.03.2011
(51) Int. Cl.: F02N 11/08, F02N 11/00, F02N 15/02

(54) **STARTER SYSTEM**

(30) Priority: 01.04.2010 JP 2010084771
(71) Applicant: Hitachi Automotive Systems, Ltd., Hitachinaka-shi Ibaraki 312-8503 (JP)
(72) Inventor: NISHIOKA Akira, Chiyoda-ku, Tokyo 100-8220 (JP); KAI Ryuu, Chiyoda-ku, Tokyo 100-8220 (JP); KUNIYOSHI Hiroyasu, Chiyoda-ku, Tokyo 100-8220 (JP); NAKAZATO Shigenori, Hitachinaka-shi Ibaraki 312-0062 (JP); OMATA Shigehiko, Hitachinaka-shi Ibaraki 312-8503 (JP)
(74) Representative: MERH-IP Matias Erny Reichl Hoffmann
(86) International application number: PCT/JP2011/057433
(87) International publication number: WO 2011/125553

(57) **Abstract**

Provided is a starter system capable of rapidly restarting an engine in response to an engine restart request issued on the way to an engine stop, and reducing noise generated at the time of engagement between a pinion and a ring gear of the engine. This starter system includes: a pinion which transmits power for starting an engine to a ring gear connected with the engine; a motor which rotates the pinion; a magnet switch which pushes the pinion out toward the ring gear; a one-way clutch which prevents transmission of the power of the motor in the reverse rotation direction of the pinion; and a controller which controls the motor and the magnet switch. The controller controls the magnet switch such that the magnet switch meshes the pinion with the ring gear when the following conditions are satisfied after an engine stop: (1) both the rotation direction of the ring gear and the rotation direction of the pinion are normal directions; and (2) when a first rotation speed of the ring gear is higher than a second rotation speed synchronous with the rotation speed of the pinion.

## Description

### Technical Field

The present invention relates to a starter system for idling stop.

### Background Art

Recently, in the field of a starter system for idling stop, attention has been given to the control performed when a request for restart is issued from a driver immediately after an engine stop (such as the case in which a red traffic light turns to green immediately after a stop of a vehicle in response to the red light). For example, there is a technology which controls the starter system such that a pinion of the starter is brought into engagement with a ring gear of the engine in response to an engine restart request issued on the way to the engine stop (see PTL 1).

### Citation List

### Patent Literature

PTL 1: Publication of Patent No. 4,214,401

### Summary of Invention

### Technical Problem

According to PLT 1, engagement between the ring gear of the engine and the pinion of the starter is not made when the engine restart request is not issued. On the other hand, there is a possibility of reverse rotation of the engine on the way to the engine stop, during which period engagement of the gear is not achieved (the starter can drive only in the normal rotation direction). Thus, when the restart request is issued during reverse rotation of the engine, the use of the starter is not allowed in the period before the normal rotation of the engine. In this case, a long time is required before the engine restart. Even when the gears are rapidly brought into mesh, great noise generated by the composite factors of collision between the pinion and ring gear in accordance with the relative rotation speeds thereof, rubbing between the side surfaces of the gears caused before complete engagement between the pinion and the ring gear, collision between the tooth surfaces after engagement of the gears, and other noise deteriorates the degree of silence within the vehicle chamber.

An object of the invention is to provide a starter system capable of rapidly restarting an engine in response to a restart request on the way to an engine stop without generating noise.

### Solution to Problem

One of preferred modes of the invention for solving the aforementioned problems is as follows.

A starter system provided according to the preferred mode of the invention includes a pinion which transmits power for starting an engine to a ring gear connected with the engine; a motor which rotates the pinion; a magnet switch which pushes the pinion out toward the ring gear; a one-way clutch which prevents transmission of the power of the motor in the reverse rotation direction of the pinion; and a controller which controls the motor and the magnet switch. The controller controls the magnet switch such that the magnet switch meshes the pinion with the ring gear when the following conditions are satisfied after an engine stop: (1) both the rotation direction of the ring gear and the rotation direction of the pinion are normal directions; and (2) when a first rotation speed of the ring gear is higher than a second rotation speed synchronous with the rotation speed of the pinion.

### Advantageous Effects of Invention

According to the invention, a starter system capable of rapidly restarting an engine in response to a restart request issued on the way to an engine stop without generating noise can be provided.

### Brief Description of Drawings

[FIG. 1] FIG. 1 is a front view illustrating chamfer positions of a pinion and a ring gear.
[FIG. 2] FIG. 2 is a perspective view illustrating chamfer positions of the pinion.
[FIG. 3] FIG. 3 is a perspective view illustrating chamfer positions of the ring gear.
[FIG. 4] FIG. 4 illustrates an engagement process of the gears with the chamfers provided.
[FIG. 5] FIG. 5 illustrates an engagement process of the gears with no chamfer provided.
[FIG. 6] FIG. 6 shows a relationship between a starter and the ring gear.
[FIG. 7] FIG. 7 shows a plunge timing of the pinion based on the relationship between the plunge timing and the rotation speed.

### Description of Embodiments

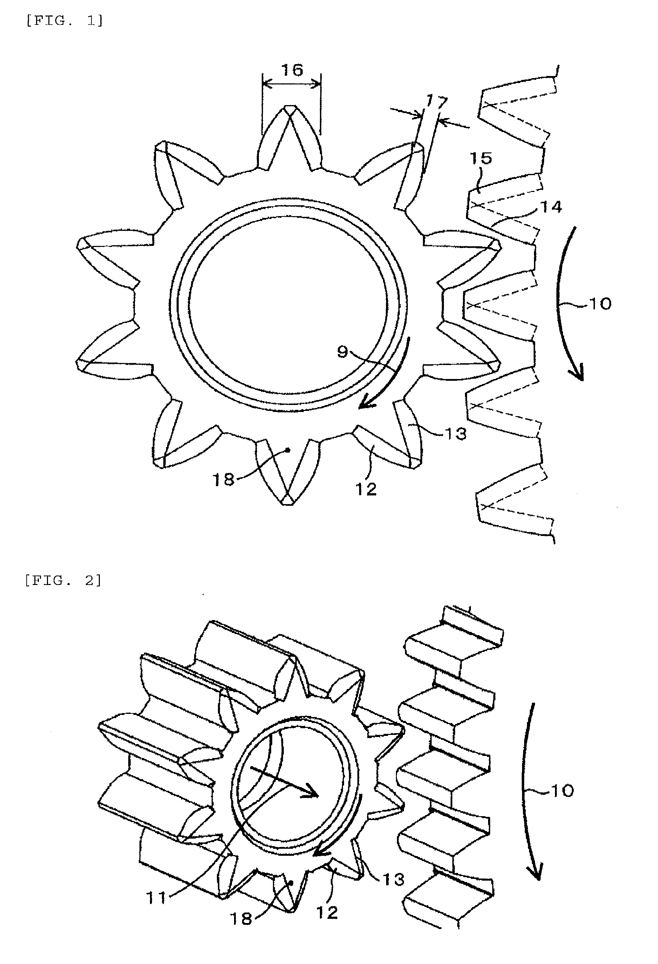

A starter system according to this embodiment is hereinafter described with reference to FIGS. 1 through 7.

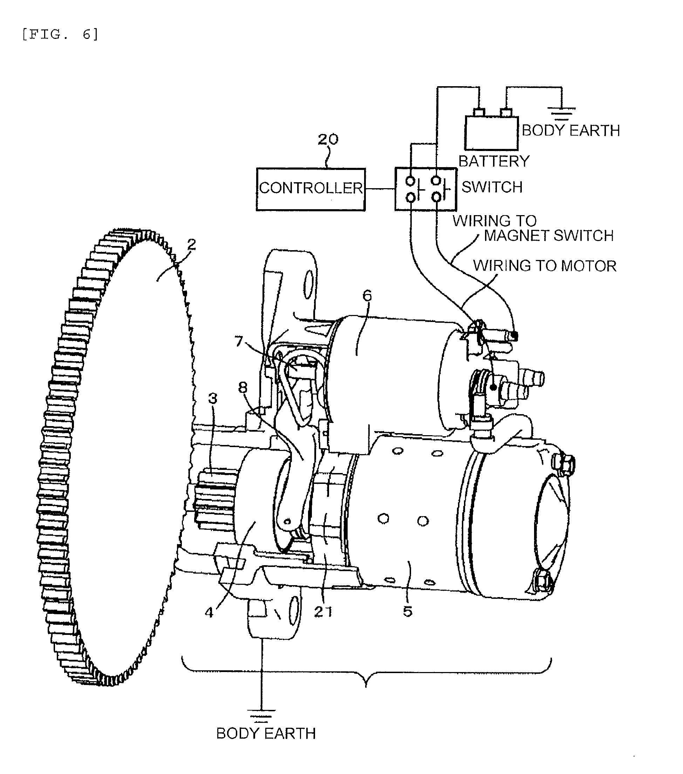

FIG. 6 illustrates a relationship between a starter and a ring gear. A ring gear 2 is directly connected with a crank shaft of an engine so that the rotation of the ring gear 2 and the rotation of the engine can be combined. However, the figure shows only a simplified shape of the ring gear. A starter 1 attached to the outside wall of the engine starts the engine by rotating a pinion 3 meshed with the ring gear 2. The power for rotating the pinion 3 is generated by a motor 5. This power is transmitted to the pinion with sufficient torque raised by reduction of the revolutions of the output shaft of the motor by the function of a reduction mechanism 21.

A one-way clutch 4 is provided between the motor 5 and the pinion 3. The one-way clutch 4 is so designed as to transmit the power only in the direction from the motor 5 to the engine. According to this structure, the rotation speed of the ring gear 2 under the condition of engagement between the pinion 3 and the ring gear 2 becomes the synchronous speed with the rotation speed of the motor 5 in correspondence with the reduction ratio, or a speed higher than the synchronous speed. More specifically, when the rotation speed of the ring gear 2 comes to drop to a speed lower than the synchronous speed with the rotation speed of the motor 5, the one-way clutch 4 transmits power to the ring gear 2. Thus, the rotation speed of the ring gear 2 does not become lower than the synchronous speed with the rotation speed of the motor 5. On the other hand, when the rotation speed of the ring gear 2 is higher than the synchronous speed with the rotation speed of the motor 5, the one-way clutch 4 does not transmit power to the motor 5 from the ring gear 2. Thus, this speed relationship can be freely maintained. The synchronous speed in this context is a rotation speed which allows rotations of the pinion and the ring gear in engagement with each other.

The power for plunging the pinion 3 into the ring gear 2 is generated by a magnet switch 6. The magnet switch 6 contains an electromagnet which attracts a plunger 7 located at the center of the magnet switch 6 by using an electromagnetic force so as to allow linear movement of the plunger 7.

When the plunger 7 is attracted by the magnet switch 6, the movement of the plunger 7 shifts the one-way clutch 4 via a shift lever 8, thereby shifting the pinion 3 in the axial direction. In other words, the pinion 3 and the one-way clutch 4 shift on the same axis as one body. Thus, for meshing the pinion 3 with the ring gear 2, the magnet switch 6 is energized to cause plunging of the pinion. On the other hand, for disengaging the pinion 3 from the ring gear 2, energization of the magnet switch 6 is suspended.

The magnet switch 6 contains a spring which pushes the plunger 7 outward at the time of cancellation of energization. This movement of the plunger 7 is transmitted to the pinion 3 via the shift lever 8, whereby the pinion is drawn inward for disengagement from the ring gear.

The motor 5 and the magnet switch 6 are controlled by a controller 20. The controller 20 may be either an engine control unit (ECU) or a separate controller dedicated for control of the starter 1. While FIG. 6 shows an example of the controller 20 disposed separately from the starter 1, the controller 20 and the starter 1 may be an integrated unit when the controller 20 is a separate controller dedicated for control of the starter 1.

At the time of a stop as idling stop, the controller 20 pushes the pinion 3 out toward the ring gear 2 regardless of the presence or absence of an engine restart request from the driver. Thus, even when the restart request is issued under the reverse rotation of the engine on the way to the engine stop, engagement between the pinion and the ring is already achieved by the time of the issue of the request. Accordingly, the engine can restart immediately. Moreover, the vehicle can stop right away at the moment of no load of the engine or a sufficiently low load of the engine. In this case, a certain period for confirming that an immediate restart request is not issued is unnecessary. Accordingly, the period of the engine stop increases, which reduces both the fuel cost and the carbon dioxide exhaust amount.

For pushing the pinion 3 out on the way to the engine stop, the controller 20 controls the magnet switch 6 such that the pinion 3 can be pushed out toward the ring gear 2 during inertial rotation of the motor 5 effected by temporarily rotating the motor 5 and then suspending the supply of the power for rotating the motor 5 in the period of inertial rotation of the engine after the engine stop.

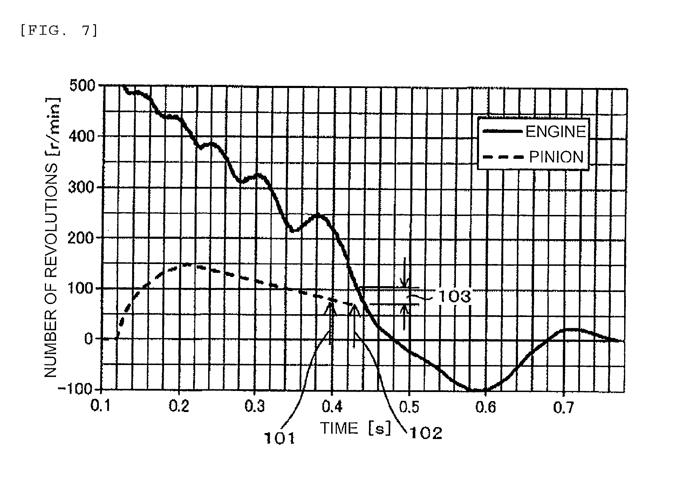

FIG. 7 shows the relationship between the plunge timing of the pinion 3 and the rotation speed of the engine. The horizontal axis represents time, whereas the vertical axis represents the rotation speed. The rotation speed of the engine indicated by a solid line shows an example of actual values measured at the time of a simple engine stop. The rotation speed of the engine is equivalent to the rotation speed of the ring gear 2. In this graph, the rotation speed of the pinion 3 converted into the synchronous rotation speed of the ring gear 2 is indicated by a broken line so as to show the timing of engagement of the pinion 3. The controller 20 energizes the magnet switch 6 at the time of an arrow 101 to allow plunge of the pinion. As a result, the pinion 3 contacts the ring gear 2 at the time of an arrow 102.

A certain time is required before contact between the pinion 3 and the ring gear 2 for acceleration of the movable portions of the pinion 3 and the like and shift thereof through the clearance between the ring gear 2 and the pinion 3. Thus, a time difference is produced between the timing 101 for energization of the magnet switch 6 and the timing 102 for contact between the pinion 3 and the ring gear 2. The rotation speed of the engine continuously changes during the period of this time difference, whereby a rotation speed difference indicated by a width 103 is produced between the ring gear and the pinion at the time of the timing 102 for contact.

The controller 20 controls plunge of the pinion 3 such that the rotation speed of the ring gear 2 at the moment of contact between the pinion 3 and the ring gear 2 produced by the plunge of the pinion 3 becomes higher than the rotation speed synchronous with the rotation speed of the pinion 3. Particularly, the present inventors have found from their studies that the appropriate timing is such a timing which produces a speed difference larger than 0 revolution per minute and smaller than 80 revolutions per minute. When the relative speed difference at the moment of contact between the pinion and the ring gear is excessively large, a long time is required before insertion.

After the contact between the pinion 3 and the ring gear 2, the pinion 3 is inserted at the time when the teeth of the pinion come into the clearances between the teeth of the ring gear 2. As a result, the ring gear 2 and the pinion 3 engage with each other and rotate in synchronization with each other. When the rotation speed of the ring gear 2 at that time is higher than the speed synchronous with the motor 5, the ring gear 2 rotates without synchronization by the function of the one-way clutch 4. In this case, the ring gear 2 comes to rotate in synchronization with the motor 5 after the rotation speed of the ring gear 2 is reduced to a rotation speed synchronous with the motor 5.

For example, when the numbers of the teeth of the pinion 3 and the ring gear 2 are 10 and 100, respectively, the gear ratio becomes 10. When the pinion 3 thus constructed rotates at 1,000rpm, the synchronous rotation speed of the ring gear 2 becomes 100rpm. In this case, the controller 20 controls such that the pinion 3 can be pushed out at the time when the rotation speed of the ring gear 2 becomes higher than 100rpm. According to this example, the present inventors have found from their studies that the rotation speed of the ring gear 2 may drop approximately up to 130rpm during the period from the moment of the start of push-out of the pinion 3 to the moment of contact between the pinion 3 and the ring gear 2. Thus, the controller 20 determines the contact timing between the pinion 3 and the ring gear 2 while calculating the rotation speed drop during this period.

According to this embodiment, therefore, the gear ratio is defined as (the tooth number of the ring gear 2) / (the tooth number of the pinion 3). When (the number of revolutions of the ring gear 2) is larger than (the number of revolutions of the pinion 3) / (the gear ratio), it is defined that the rotation speed of the ring gear 2 is higher than the rotation speed synchronous with the rotation speed of the pinion 3.

This embodiment is characterized in the point that, with the one-way clutch 4 provided within the starter 1, the pinion 3 is pushed out toward the ring gear 2 at the moment when the rotation speed of the ring gear 2 becomes higher than the rotation speed synchronous with the rotation speed of the pinion 3. This structure eliminates the necessity for synchronization between the motor and the ring gear after engagement between the ring gear 2 and the pinion 3, and avoids impact caused by connection between rotational bodies having different speed differences. Accordingly, generation of noise stops.

At the time of engagement between the pinion 3 and the ring gear 2, the gear is difficult to insert by any pushing force under the condition of contact between the side surfaces of both the gears. In designing the gears capable of achieving smooth power transmission, the clearances (backlash) between the respective teeth engaging with each other are not allowed to be widened. Thus, in case of random push-out of the pinion 3 toward the ring gear 2, the possibility of complete mesh of the teeth of the pinion 3 into the clearances between the teeth of the ring gear 2 is extremely low, while the possibility of contact between the side surfaces of the teeth of the ring gear 2 and the pinion 3 is extremely high. When the pinion 3 and the ring gear 2 continue synchronous rotation with contact between the side surfaces thereof, the contact between the side surfaces continues due to no change of the positional relationship between the pinion 3 and the ring gear 2. In this case, engagement between the pinion 3 and the ring gear 2 is not achieved. Therefore, for the purpose of producing a relative speed difference between the pinion 3 and the ring gear 2, the rotation speed of the ring gear 2 is set higher than the rotation speed synchronous with the rotation speed of the pinion 3. As a result, with the function of the one-way clutch 4, the positional relationship between the respective teeth shifts in accordance with the relative speeds of both the gears after contact between the side surfaces thereof. Finally, the teeth of the pinion 3 reach the clearances between the teeth of the ring gear 2 and allow insertion of the pinion.

When the pinion 3 having a higher rotation speed than the rotation speed synchronous with the rotation speed of the ring gear 2 engages with the ring gear 2 without the function of the one-way clutch 4, synchronization between the pinion 3 and the ring gear 2 is required at the moment the pinion 3 and the ring gear 2 engage with each other. As a result, large impact is produced, and the objects vibrate and generate noise.

When the ring gear 2 having a rotation speed lower than the rotation speed synchronous with the rotation speed of the pinion 3 engages with the pinion 3 even with the function of the one-way clutch 4, a synchronizing force generated in the direction in which the motor 5 accelerates the ring gear 2 produces noise. Accordingly, the advantage of noise reduction can be offered when the combination of the operation direction of the one-way clutch 4 and the speed relationship between the ring gear 2 and the motor 5 is specified as in the foregoing description.

The action of the engine shown in FIG. 7 shows the case in which the pinion is not meshed. When the pinion 3 is actually meshed, the change of the rotation speed of the engine varies after the engagement of the pinion 3. While the example in which the pinion is rotated prior to engagement of the pinion 3 has been discussed in this embodiment, the rotation speed of the pinion may be set to zero.

FIG. 1 is a front view of the pinion 3 and the ring gear 2. The plunge of the pinion 3 is achieved by its movement from the rear side toward the front side with respect to the sheet surface of the figure. The rotation direction of the normal rotation of the pinion 3 is indicated by an arrow 9, while the rotation direction of the normal rotation of the ring gear engaging with the pinion 3 is indicated by an arrow 10.

Chamfers 12 formed on the pinion 3 in the advancing direction of the normal rotation of the pinion 3 are effective at the time of engagement of the pinion on the way to the engine stop. Chamfers 13 formed on the opposite side with respect to the advancing direction of the pinion 3 are effective at the initial engine start, and useful at the time of engagement of the rotating pinion 3 with the ring gear 2 remaining stationary. The chamfers 13 may be eliminated in such a structure which always permits engagement of the pinion 3 at the time of a stop of the engine.

Chamfers 14 and 15 formed on the ring gear 2 on the rear side of the sheet surface are invisible and therefore indicated by broken lines as invisible lines. The chamfers 15 formed on the opposite side with respect to the advancing direction of the normal rotation of the ring gear 2 are effective at the time of engagement of the pinion 3 on the way to the engine stop. The chamfers 14 formed in the advancing direction of the ring gear 2 are effective at the initial start of the engine. Thus, the chamfers 12 and the chamfers 15 have the same function, and similarly the chamfers 13 and the chamfers 14 have the same function. It is preferable that chamfers in the uniform shape are formed on all the teeth of the pinion 3, and that chamfers in the uniform shape are formed on all the teeth of the ring gear 2.

A maximum width 17 corresponds to the maximum width of each of the chamfers 12 as viewed in the direction perpendicular to a side surface 18 of the pinion. Particularly, the present inventors have found from their studies that the dimension of the maximum width 17 set larger than 1/10 of a tooth thickness 16 and smaller than 1/2 of the tooth thickness is particularly effective for reduction of the decrease in the tooth width of the pinion, reduction of increase in the surface pressure produced on the tooth surface at the time of transmission of power, and maintenance of sufficient durability. The tooth thickness in this context refers to a distance such as the tooth thickness 16 measured at a portion corresponding to a chord tooth thickness on a pitch circle with respect to a reference tooth tip circle of the tooth of the pinion.

FIG. 2 is a perspective view showing the chamfers of the pinion 3 as viewed three-dimensionally. The plunge direction of the pinion 3 is indicated by an arrow 11. The chamfers 12 and 13 are provided at the corners formed by the side surface 18 in this direction and the tooth surfaces. It is preferable that the angle formed by each of the side surfaces 12 produced by chamfering and the side surface 18 of the tooth is set at approximately 45 degrees. This angle may be optimized in accordance with the relationship between the relative circumferential speed of the ring gear 2 with respect to the pinion 3 and the plunging speed of the pinion 3.

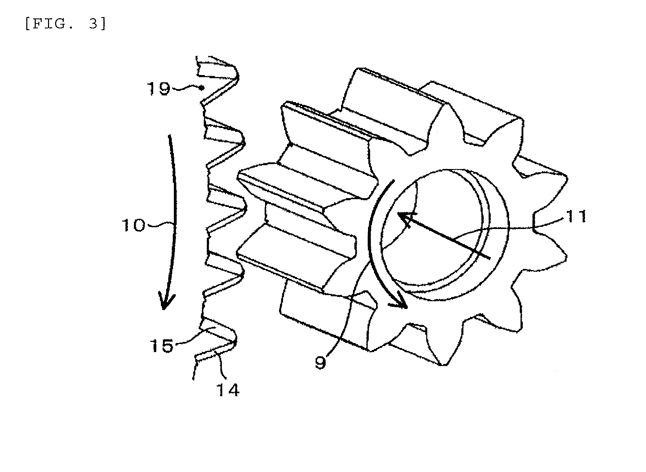

FIG. 3 is a perspective view showing the chamfers of the ring gear 2 as viewed three-dimensionally. The chamfers 14 and 15 are provided at the corners formed by a side surface 19 of the ring gear 2 on the pinion side and the tooth surfaces. While the chamfers are formed on both the pinion 3 and the ring gear 2 in this embodiment, such a structure which forms chamfers not on the ring gear but only on the pinion is allowed.

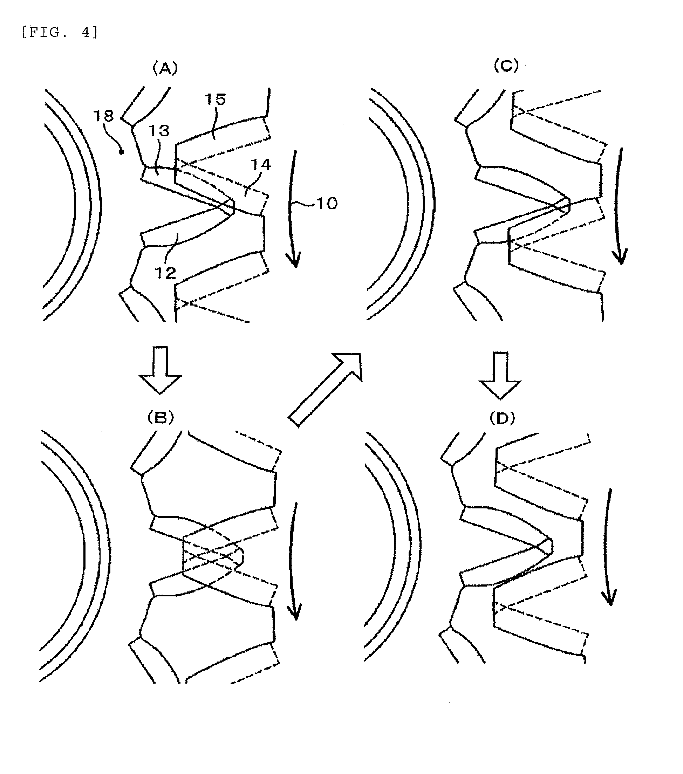

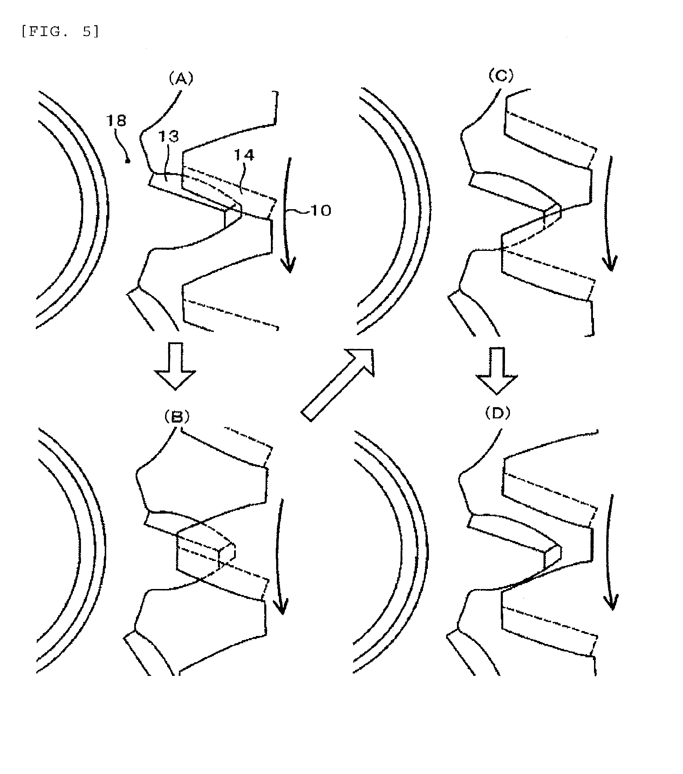

FIG. 4 illustrates the process of engagement of the gears in the structure including the combination of the chamfers according to this embodiment. FIG. 5 shows a structure which does not have effective chamfers for engagement of the pinion on the way to the engine stop in the same phases as those shown in FIG. 4. In either of the cases shown in these figures, it is assumed that the rotation speed of the ring gear is higher than the rotation speed synchronous with the rotation speed of the pinion. In addition, for easy understanding of the phase relationship between the teeth of the pinion and the ring gear, the figures illustrate the teeth of the ring gear shifting in the normal rotation direction with the positions of the teeth of the pinion fixed. The directions shown in the figures are similar to the directions shown in FIG. 1. The pinion shifts from the rear side toward the front side with respect to the sheet surfaces of the figures for insertion.

In FIG. 4, the relative positional relationship of the teeth changes in the order of (A), (B), (C), and (D) in FIG. 4 in this order in accordance with the relative rotation of the ring gear 2 indicated by the arrow 10. FIG. 4 (A) illustrates the condition of contact between the chamfer 13 at the rear edge of the pinion 3 and the chamfer 14 at the front edge of the ring gear 2. When the ring gear 2 applies a force in the direction of the arrow 10 under the contact between the chamfered slopes, a force in the direction of pushing back the pinion is generated as a result of operation of the slopes. The pinion can be inserted only when the force for pushing the pinion for insertion is larger than the force for pushing back the pinion. The force generated at the moment of contact between the pinion 3 and the ring gear 2 is produced by collision caused by the speed difference, and therefore is dependent on the relative speeds of the pinion 3 and the ring gear 2. Thus, the force for pushing back the pinion increases as the rotation speed difference between the pinion 3 and the ring gear 2 becomes larger, in which condition insertion of the pinion 3 is not allowed.

When the positional relationship between the teeth shifts in accordance with the relative speed of the ring gear 2, the positional relationship comes to a condition shown in FIG. 4(B). Under this condition, the side surface 18 of the pinion 3 contacts the side surface of the ring gear 2. Thus, insertion of the pinion 3 is not allowed with any force for pushing the pinion 3 for insertion.

The subsequent phase comes to a condition shown in FIG. 4(C), where the chamfer 12 at the front edge of the pinion 3 overlaps with the chamfer 15 at the rear edge of the ring gear 2. In this condition, the ring gear 2 shifts in the direction of the arrow 10 in such a manner that the contact surface moves away from the pinion 3. This condition allows insertion of the pinion 3.

Even in the subsequent phase shown in FIG. 4 (D), the tooth of the pinion 3 lies in the space between the teeth of the ring gear 2, in which condition insertion of the pinion 3 is still allowed. When the phase further advances without coming to this condition, the phase reaches the condition shown in FIG. 4 (A). In this case, the teeth positional relationship between the pinion 3 and the ring gear 2 becomes any of the relationships shown in FIGS. 4 (A) through 4 (D). In these conditions, secure insertion of the pinion 3 is allowed only in the conditions shown in FIGS. 4(C) and 4(D).

FIG. 5 illustrates the combination of the pinion 3 and the ring gear 2 having no effective chamfers for engagement of the pinion 3 on the way to the engine stop, showing the shapes including only chamfers effective for the initial engine start. The teeth positional relationships shown in FIGS. 5 (A) through 5(D) are similar to those shown in FIGS. 4(A) through 4(D).

FIG. 5(A) illustrates the condition of contact between the chamfer 13 at the rear edge of the pinion 3 and the chamfer 14 at the front edge of the ring gear 2. The possibility of insertion of the pinion 3 is similar to that of the condition shown in FIG. 4(A).

In the condition shown in FIG. 5(B), the side surface 18 of the pinion 3 contacts the side surface of the ring gear 2, wherefore insertion of the pinion 3 is not allowed.

In the condition shown in FIG. 5(C), the side surface 18 of the pinion 3 contacts the side surface of the ring gear 2 similarly to the condition shown in FIG. 5(B), wherefore insertion of the pinion 3 is not allowed.

In the condition shown in FIG. 5(D), the tooth of the pinion 3 comes into the space between the teeth of the ring gear 2, only in which condition the pinion can be securely inserted.

From the comparison between FIGS. 4 and 5, it is understood that insertion of the pinion is facilitated by chamfers formed in this embodiment when the rotation speed of the ring gear 2 is higher than the rotation speed synchronous with the rotation speed of the pinion 3. The present inventors have found from their studies that the noise generated by engagement between the pinion 3 and the ring gear 2 increases in accordance with the time required from the contact between the pinion 3 and the ring gear 2 until the teeth of the pinion 3 are inserted between the teeth of the ring gear 2. The chamfers thus formed can reduce the time required for insertion of the pinion 3 into the ring gear 2 after rubbing between the side surfaces of the pinion 3 and the ring gear 2, that is, the time for generating noise. Accordingly, noise generation can decrease. While the case in which both the pinion 3 and the ring gear 2 have chamfers in this embodiment has been discussed, such a structure which provides chamfers only on either of the pinion 3 or the ring gear 2 is effective.

This embodiment is characterized in that the pinion 3 have chamfers in the rotation direction of the gear in addition to the push-out of the pinion 3 at the moment when the rotation speed of the ring gear 2 becomes higher than the rotation speed synchronous with the rotation speed of the pinion 3.

The positional relationship between the teeth of both the gears after the contact of the side surfaces thereof changes such that the teeth of the ring gear 2 shifts in the advancing direction with respect to the teeth of the pinion 3. Thus, the contact between the font edge of the pinion 3 (advancing side) and the rear edge of the ring gear 2 (opposite to the advancing side) is the final phase in the period of the contact between the side surfaces of the teeth, thereafter insertion of the pinion takes place. In this case, insertion of the pinion 3 starts at the time when the rear edge of the ring gear 2 reaches the chamfered portion of the front edge corner of the pinion 3. Thus, the time required for insertion is shorter than a structure which does not have chamfers. Accordingly, the total volume of noise generated by rubbing of the side surfaces of the gears can decrease to a low noise level.

The method of pushing the pinion 3 out under the speed reduction condition of the rotation of the pinion 3 can prevent noise increase caused by deviation of the relative speed difference between the rotation speed of the pinion 3 and the reduced speed of the ring gear 2 from the target speed difference. More specifically, when the time of the contact between the pinion 3 and the ring gear 2 after the push-out of the pinion 3 slightly deviates from the target time, the rotation speed of the ring gear 2 may vary by the deviation and shift from the speed difference specified in this embodiment. However, when the rotation speed of the pinion 3 is reduced similarly to the ring gear 2, the speed difference does not become larger. Accordingly, noise generation does not increase.

The chamfers formed at the rear edge of the ring gear 2 similarly reduce the time required for insertion of the pinion 3 after contact between the pinion 3 and the ring gear 2, thereby contributing to noise reduction. The structure including the combination of both types of chamfers can further reduce noise. Reference Signs List

1 starter
2 ring gear
3 pinion
4 one-way clutch
5 motor
6 magnet switch
7 plunger
8 shift lever
9 normal rotation direction of pinion
10 normal rotation direction of ring gear
11 plunge direction of pinion
12 chamfer at front edge of pinion in normal rotation
13 chamfer at rear edge of pinion in normal rotation
14 chamfer at front edge of ring gear in normal rotation
15 chamfer at rear edge of ring gear in normal rotation
16 tooth thickness of pinion
17 maximum width of chamfer of pinion in side surface direction
18 side surface of pinion on plunge side
19 side surface of ring gear on starter side
20 controller
21 reduction mechanism

## Claims

1. A starter system, comprising:
a pinion which transmits power for starting an engine to a ring gear connected with the engine;
a motor which rotates the pinion;
a magnet switch which pushes the pinion out toward the ring gear;
a one-way clutch which prevents transmission of the power of the motor in the reverse rotation direction of the pinion; and
a controller which controls the motor and the magnet switch,
wherein the controller controls the magnet switch which meshes the pinion with the ring gear when a first rotation speed of the ring gear is higher than a second rotation speed synchronous with the rotation speed of the pinion after a stop of the engine.

2. The starter system according to claim 1, wherein the controller controls the magnet switch such that the magnet switch temporarily rotates the motor and then suspends power supply for rotating the motor during inertial rotation of the engine caused after a stop of the engine, so as to push the pinion out toward the ring gear during inertial rotation of the motor.

3. The starter system according to claim 1, wherein teeth of the pinion have chamfers at the tip corners of the teeth on the pinion push-out side and on the advancing side of the normal rotation of the pinion.

4. The starter system according to claim 3, wherein the maximum width of each of the chamfers as viewed in the direction perpendicular to the side surface of the pinion is larger than 1/10 of the tooth thickness and smaller than 1/2 of the tooth thickness.

5. The starter system according to claim 1, wherein the controller controls the magnet switch such that the magnet switch meshes the pinion with the ring gear when the first rotation speed is higher than the second rotation speed by a number of revolutions larger than 0 revolution per minute and smaller than 80 revolutions per minute.

6. The starter system according to claim 1, wherein the teeth of the ring gear have chamfers on the side opposite to the advancing direction of the normal rotation of the ring gear.
